# FASCICULE DE BREVET EUROPEEN

(11) **EP 1 985 825 B1**
(45) Date de publication et mention de la délivrance du brevet: **13.04.2011**
(21) Numéro de dépôt: 08290375.8
(22) Date de dépôt: 16.04.2008
(51) Int. Cl.: F02D 19/06, F02D 19/08, F02D 41/00

(54) **Procédé pour contrôler le fonctionnement d'un moteur pouvant utiliser un mode de combustion en monocarburation ou en multicarburation**
Verfahren zur Kontrolle der Motorfunktion mit Auswahl der Verbrennungsmethode zwischen Mono- oder Mehrfachverbrennung
Method for controlling the operation of an engine with a single-fuel or multiple-fuel injection mode

(30) Priorité: 27.04.2007 FR 0703122
(43) Date de publication de la demande: 29.10.2008
(73) Titulaire: IFP Energies nouvelles, 92852 Rueil-Malmaison Cedex (FR)
(72) Inventeur: Monnier, Gaetan, 78240 Aigremont (FR)

(56) Documents cités:
- WO-A-99/45252
- WO-A-2004/111416
- DE-A1- 3 833 123
- DE-A1- 19 539 170

## Description

La présente invention se rapporte à un procédé pour contrôler le fonctionnement d'un moteur utilisant plusieurs carburants.

Elle concerne, plus particulièrement, les moteurs fonctionnant avec un premier mode de combustion, dit monocarburation, selon lequel un seul carburant est utilisé, généralement pour le ralenti et les faibles charges de ce moteur, ou selon un autre mode de combustion, appelé multicarburation, permettant d'associer plusieurs carburants de nature différente, pour les moyennes et fortes charges.

Un tel type de moteur est mieux décrit dans le brevet US 5 975 050 dans lequel le moteur fonctionne en monocarburation avec un carburant généralement en phase liquide, de type Diesel, injecté directement dans la chambre de combustion du moteur (injection directe) ou dans une chambre de précombustion (injection indirecte), ou en mode bicarburation, dans lequel un carburant gazeux est associé à ce carburant liquide. Ce mode permet de réaliser deux modes de combustion dans le même cycle moteur, une auto-inflammation du carburant et une combustion du mélange air/gaz par propagation d'un front de flamme initiée par l'auto-inflammation.

Comme cela est connu de l'art antérieur, des méthodes et appareils permettent de contrôler la distribution des carburants ainsi que la transition entre les deux modes de fonctionnement du moteur. A titre d'exemple, les brevets US 5 450 829 et US 5 975 050 ainsi que les demandes internationales WO 99/45256 et WO 99/46495 décrivent de tels méthodes et appareils.

Il est également connu par le brevet français FR 2 817 913 du demandeur, une méthode de gestion d'un moteur à combustion interne fonctionnant en mono ou en bicarburation. Avec cette méthode, durant le fonctionnement en monocarburation, l'énergie nécessaire au fonctionnement du moteur est apportée soit par une injection indirecte d'un carburant gazeux, soit par une injection directe d'un carburant liquide, ici de l'essence. Pendant le fonctionnement en bicarburation, une injection d'essence est réalisée pour un mélange sous une forme spécifique tout en étant associée à une injection de carburant gazeux.

Cependant, le demandeur a pu constater que les différents carburants utilisés, comme l'essence ou le gaz naturel principalement, possèdent des caractéristiques physico-chimiques assez différentes. Ainsi, deux de ces caractéristiques, qui sont l'indice d'octane (le pouvoir anti-détonant), et la densité énergétique volumique (énergie développable pour un volume de mélange air-carburant à richesse, pression et température données) ont un fort impact sur les performances et le rendement du moteur.

Ces différences entre les carburants utilisés sur un même moteur conduisent à définir les caractéristiques du moteur - telles que son rapport volumétrique de compression, ses diagrammes de distribution (ouverture et fermeture des soupapes d'admission et d'échappement), ou encore la définition du turbocompresseur dans le cas d'un moteur suralimenté - en fonction soit à partir de l'un des carburants utilisables, soit pour un compromis de fonctionnement avec les différents carburants utilisés.

Dans tous les cas mentionnés ci-dessus, le fonctionnement du moteur n'est pas optimal.

En effet, dans le cas d'un moteur à allumage commandé suralimenté pouvant fonctionner en monocarburation ou en bicarburation, tel qu'au gaz naturel et/ou à l'essence, le gaz naturel est injecté sous forme gazeuse dans les conduits d'admission par l'intermédiaire de son circuit d'alimentation (réservoirs, rampe d'alimentation et injecteurs spécifiques) et l'essence est injectée sous forme liquide soit dans les conduits d'admission du moteur (injection indirecte), soit directement dans la chambre de combustion (injection directe) par l'intermédiaire d'un deuxième circuit d'alimentation adapté à ses caractéristiques.

Ce type de motorisation est parfaitement connu de l'homme de l'art mais les performances du moteur sont limitées par les caractéristiques de chaque carburant à savoir : la densité énergétique pour le gaz naturel ou l'indice d'octane pour l'essence.

En effet, dans le cas du gaz naturel, l'indice d'octane du carburant est très élevé (de l'ordre de 120 à 130). Ceci permet d'améliorer le rendement du moteur en repoussant le problème de cliquetis, c'est-à-dire l'auto-inflammation du mélange carburé (ou charge) pouvant conduire à la destruction du moteur, par une augmentation du taux de compression ou par un réglage optimum du calage de la combustion ou encore par la limitation de l'enrichissement pour la maîtrise de la température à l'échappement. En revanche, ce gaz naturel, qui est injecté sous forme gazeuse et qui possède une densité énergétique faible, de l'ordre de 3,1 KJ/L (kilojoules par litre), conduit à limiter les performances du moteur par une perte de rendement volumétrique que la suralimentation ne peut pas toujours compenser.

De ce fait, le moteur a un bon rendement mais possède des performances limitées, notamment à faibles régimes moteur.

A l'inverse, dans le cas du fonctionnement à l'essence, l'indice d'octane du carburant est beaucoup plus faible (de l'ordre de 91 à 98) mais la densité énergétique est forte (supérieure à 3,4 KJ/L). Ceci entraîne un bon remplissage en énergie de la chambre de combustion mais avec un rendement d'utilisation faible.

De ce fait, le moteur possède une performance réduite liée à la limitation imposée par le cliquetis, soit en terme de rapport volumétrique de compression exploitable, soit en terme de calage de combustion par une sous-avance à l'allumage.

En conséquence, la performance du moteur est limitée par le paramètre le plus critique du carburant utilisé : la densité énergétique pour le gaz naturel ou l'indice d'octane pour l'essence.

La présente invention se propose de remédier aux inconvénients précités grâce à un procédé de contrôle qui permette de maximiser l'exploitation des points forts de chaque carburant.

A cet effet, l'invention concerne un procédé de contrôle du fonctionnement d'un moteur à combustion interne à allumage commandé comportant au moins une chambre de combustion et pouvant utiliser un mode de combustion en monocarburation ou en multicarburation avec au moins un type de carburant comportant un fort indice d'octane et une faible densité énergétique et au moins un autre type de carburant comportant un faible indice d'octane et une forte densité énergétique, procédé dans lequel l'énergie nécessaire au fonctionnement du moteur en monocarburation est apportée soit par l'un ou l'autre desdits types carburants et dans lequel l'énergie nécessaire au fonctionnement du moteur en multicarburation est procurée par une association des deux types de carburants, caractérisé en ce que, pour le mode de fonctionnement du moteur en multicarburation, le procédé consiste :
- à déterminer les valeurs de consigne de la densité énergétique globale et de l'indice d'octane global résultant de l'association des carburants,
- à introduire dans la chambre de combustion lesdits carburants avec une proportion visant à obtenir les valeurs de consigne,
- à évaluer les valeurs réelles de la densité énergétique globale et/ou l'indice d'octane global desdits carburants introduits,
- en cas de dérive entre les valeurs de consigne et les valeurs réelles, à compenser cette dérive en faisant varier la proportion de l'un au moins des carburants pour obtenir la densité énergétique et/ou l'indice d'octane de consigne.

Le procédé peut consister à évaluer l'indice d'octane global réel à partir d'un signal d'un capteur de vibrations placé sur le moteur.

Le procédé peut consister à évaluer la densité énergétique globale réelle à partir d'un signal d'un capteur de pression de la chambre de combustion.

Le carburant à fort indice d'octane et à faible densité énergétique peut être pris parmi le gaz naturel, les alcools ou les éthers.

Le carburant à faible indice d'octane et à forte densité énergétique peut être pris parmi les essences.

Le procédé peut consister à associer en multicarburation au moins une essence avec du gaz naturel, ou au moins une essence avec au moins un alcool, ou un mélange d'au moins une essence et d'au moins un alcool avec du gaz naturel.

Les valeurs de consigne peuvent être cartographiées en fonction des paramètres de fonctionnement du moteur.

Le procédé peut consister à associer les deux types de carburant de manière à réaliser deux mélanges carburés introduits dans la chambre de combustion de façon à obtenir une stratification entre les deux mélanges.

Le procédé peut consister à réaliser une injection indirecte de deux types de carburant pour réaliser deux mélanges carburés.

Le procédé selon l'invention ainsi que ses autres caractéristiques et avantages sera mieux compris à la lecture de la description qui va suivre.

Cette description se rapporte à un moteur à combustion interne à allumage commandé comportant au moins une chambre de combustion et pouvant fonctionner en mode de combustion avec monocarburation ou avec multicarburation.

Ainsi, pour le démarrage à froid de ce moteur, celui-ci sera facilité par un fonctionnement en monocarburation avec un carburant gazeux, tel que le gaz naturel, durant quelques cycles thermodynamiques. Ceci permet ainsi d'éviter les problèmes inhérents à une injection de liquide qui se concrétise par une vaporisation incomplète du carburant et un dépôt de celui-ci sur les parois du conduit d'admission.

Pour le ralenti et les faibles charges, compte tenu du fait qu'il n'y a aucune limitation tant au niveau de l'indice d'octane qu'au niveau de la densité énergétique du carburant utilisé, l'un quelconque des carburants sera utilisé pour le mode de fonctionnement en monocarburation.

Pour les moyennes et fortes charges du moteur avec un mode de fonctionnement en multicarburation, qui, dans la description à titre d'exemple qui va suivre, est limité à la bicarburation, les proportions entre les deux carburants seront ajustés sur chaque point de fonctionnement du moteur pour tirer partie des propriétés des carburants utilisés.

Ainsi, pour une combustion à une richesse donnée et dans le cas d'une association de l'essence avec du gaz naturel, la proportion entre les deux carburants sera ajustée pour maximiser la performance et/ou le rendement du moteur, tant au niveau de l'indice d'octane global que de la densité énergétique globale de la combinaison des deux mélanges carburés (air + essence et air + gaz naturel).

Pour cela en partant du fonctionnement avec une très forte proportion de gaz naturel sur un point de pleine charge du moteur, si l'avance à l'allumage optimale est atteinte sans limitation par le cliquetis, cela signifie, d'une part, que l'on n'exploite pas tout le potentiel de l'indice d'octane possible du carburant et, d'autre part, que l'on dégrade le rendement volumétrique et donc la performance maximale par la présence du gaz qui génère une faible énergie volumique.

Partant de ce point, on introduit le mode de fonctionnement avec une combustion en bicarburation en introduisant progressivement une proportion d'essence, à iso richesse de fonctionnement. L'introduction de l'essence, se substituant à une partie du gaz naturel, va avoir pour effet de diminuer l'indice d'octane global dans la chambre de combustion tout en entraînant une augmentation de la densité d'énergie globale de la combinaison des deux mélanges carburés.

La conséquence sera donc une augmentation de la performance et du rendement du moteur, tant que la limite cliquetis n'est pas atteinte pour un réglage optimum de l'avance à l'allumage et donc de la combustion.

A partir de cela, il sera ainsi possible de déterminer, pour chaque point de fonctionnement du moteur, une proportion optimale des carburants à introduire dans la chambre de combustion du moteur pour obtenir les valeurs de consigne de l'indice d'octane global ainsi que de la densité énergétique globale de la combinaison des deux mélanges carburés.

Pour cela, il est prévu un calculateur-moteur qui contiendra des cartographies avec les paramètres optimaux de fonctionnement du moteur sur toute la gamme d'utilisation possible avec les proportions respectives de gaz et d'essence à introduire dans la chambre de combustion du moteur. De même ce calculateur comprendra des cartographies permettant de déterminer le phasage injection dans le cycle moteur du ou des carburants et/ou les durées d'injection et/ou les angles d'allumage.

Pour pouvoir connaître à tous moments la valeur réelle de l'indice d'octane global de la combinaison des deux mélanges carburés introduits dans la chambre de combustion, le capteur de vibrations (ou capteur de cliquetis) que comporte habituellement le moteur est utilisé. Le signal de ce capteur est envoyé au calculateur-moteur qui permettra d'évaluer l'indice d'octane réel de la combinaison des deux mélanges carburés introduits dans la chambre de combustion du moteur.

En cas de dérive entre la valeur de consigne de l'indice d'octane déterminée par le calculateur-moteur et la valeur réelle évaluée par ce même calculateur-moteur, les proportions respectives de gaz et d'essence sont modifiées pour obtenir les valeurs de consigne de l'indice d'octane global.

Ainsi, à titre d'exemple, si l'indice d'octane évalué est inférieur à celui de la valeur de consigne, la quantité de gaz naturel introduite sera augmentée pour faire en sorte d'augmenter cet indice d'octane jusqu'à la valeur de consigne.

De même, il peut être évalué la densité énergétique globale réelle de la combinaison des deux mélanges carburés introduits dans la chambre de combustion grâce aux signaux reçus par le capteur de pression et le capteur de température du répartiteur d'admission ou encore par une mesure directe du débit d'air associé au capteur de régime du moteur. Ces signaux sont ensuite traités par le calculateur-moteur pour évaluer la valeur réelle de cette densité énergétique.

Si cette dernière est inférieure à celle de la valeur de consigne, la quantité d'essence introduite sera augmentée pour faire en sorte d'augmenter cette densité jusqu'à la valeur de consigne.

Les applications peuvent porter sur différents couples de carburants ayant pour caractéristique principale d'avoir une densité énergétique forte si l'indice d'octane du carburant est faible et inversement. Quelques exemples de cas envisageables : essence et gaz naturel, essence et alcool, comme de l'éthanol ou du méthanol, ou mélange essence-alcool et gaz naturel.

De même, on pourra utiliser certains éthers comme le MTBE (méthyl tertio butyl éther) ou l'ETBE (éthyl tertio butyl éther) au titre de carburant à fort indice d'octane et à faible densité énergétique.

La présente invention n'est pas limitée aux exemples décrits ci-dessus mais englobe toutes variantes et tous équivalents.

Notamment, il peut être envisagé, dans le cas d'un moteur avec des multisoupapes d'admission, d'introduire chaque mélange carburé par des conduits d'admission différents pour obtenir une stratification de l'indice d'octane global en privilégiant le mélange à faible indice d'octane au début de la combustion et celui à fort indice d'octane en fin de combustion pour gagner en résistance au cliquetis.

De même, les carburants concernés peuvent être injectés de manière directe ou indirecte dans la chambre de combustion.

De manière avantageuse, il sera privilégié une injection indirecte du carburant à fort indice d'octane global et à faible densité énergétique ainsi qu'une injection indirecte du carburant à faible indice d'octane global et à forte densité énergétique.

## Revendications

1. Procédé de contrôle du fonctionnement d'un moteur à combustion interne à allumage commandé comportant au moins une chambre de combustion et pouvant utiliser un mode de combustion en monocarburation ou en multicarburation avec au moins un type de carburant comportant un fort indice d'octane et une faible densité énergétique et au moins un autre type de carburant comportant un faible indice d'octane et une forte densité énergétique, procédé dans lequel l'énergie nécessaire au fonctionnement du moteur en monocarburation est apportée soit par l'un ou l'autre desdits types carburants et dans lequel l'énergie nécessaire au fonctionnement du moteur en multicarburation est procurée par une association des deux types de carburants, **caractérisé en ce que**, pour le mode de fonctionnement du moteur en multicarburation, le procédé consiste :
- à déterminer les valeurs de consigne de la densité énergétique globale et de l'indice d'octane global résultant de l'association des carburants,
- à introduire dans la chambre de combustion lesdits carburants avec une proportion visant à obtenir les valeurs de consigne,
- à évaluer les valeurs réelles de la densité énergétique globale et/ou l'indice d'octane global desdits carburants introduits,
- en cas de dérive entre les valeurs de consigne et les valeurs réelles, à compenser cette dérive en faisant varier la proportion de l'un au moins des carburants pour obtenir la densité énergétique et/ou l'indice d'octane de consigne.

2. Procédé de contrôle du fonctionnement d'un moteur selon la revendication 1, **caractérisé en ce qu'**il consiste à évaluer l'indice d'octane global réel à partir d'un signal d'un capteur de vibrations placé sur le moteur.

3. Procédé de contrôle du fonctionnement d'un moteur selon la revendication 1, **caractérisé en ce qu'**il consiste à évaluer la densité énergétique globale réelle à partir d'un signal d'un capteur de pression de la chambre de combustion.

4. Procédé de contrôle du fonctionnement d'un moteur selon la revendication 1, **caractérisé en ce que** le carburant à fort indice d'octane et à faible densité énergétique est pris parmi le gaz naturel, les alcools ou les éthers.

5. Procédé de contrôle du fonctionnement d'un moteur selon la revendication 1, **caractérisé en ce que** le carburant à faible indice d'octane et à forte densité énergétique est pris parmi les essences.

6. Procédé de contrôle du fonctionnement d'un moteur selon la revendication 1, **caractérisé en ce qu'**il consiste à associer en multicarburation au moins une essence avec du gaz naturel, ou au moins une essence avec au moins un alcool, ou un mélange d'au moins une essence et au moins un alcool avec du gaz naturel.

7. Procédé de contrôle du fonctionnement d'un moteur selon la revendication 1, **caractérisé en ce que** les valeurs de consigne sont cartographiées en fonction des paramètres de fonctionnement du moteur.

8. Procédé de contrôle du fonctionnement d'un moteur selon la revendication 1, **caractérisé en ce qu'**il consiste à associer les deux types de carburant de manière à réaliser deux mélanges carburés introduits dans la chambre de combustion de façon à obtenir une stratification entre les deux mélanges.

9. Procédé de contrôle du fonctionnement d'un moteur selon la revendication 1, **caractérisé en ce qu'**il consiste à réaliser une injection indirecte de deux types de carburant pour réaliser deux mélanges carburés.

## Claims

1. Method of control of the operation of an internal combustion engine with controlled ignition comprising at least one combustion chamber and able to use a combustion mode on mono-fuel or on multi-fuel with at least one type of fuel comprising a high octane index and a low energy density and at least one other type of fuel comprising a low octane index and a high energy density, in which method the energy necessary to the mono-fuel operation of the engine is provided either by the one or the other of said fuel types and in which the energy necessary to the multi-fuel operation of the engine is obtained by an association of the two types of fuels, **characterised in that**, for the multi-fuel mode of operation of the engine, the method consists:
- in determining the setpoint values of the overall energy density and of the overall octane index resulting from the association of the fuels,
- in introducing said fuels into the combustion chamber with a proportion intended to obtain the setpoint values,
- in calculating the true values of the overall energy density and/or the overall octane index of said introduced fuels,
- in case of deviation between the setpoint values and the true values, in compensating for this deviation by varying the proportion of at least one of the fuels to obtain the setpoint energy density and/or octane index.

2. Method of control of the operation of an engine in accordance with claim 1, **characterised in that** it consists in calculating the true overall octane index from a signal of a vibration sensor placed on the engine.

3. Method of control of the operation of an engine in accordance with claim 1, **characterised in that** it consists in calculating the true overall energy density from a signal of a pressure sensor of the combustion chamber.

4. Method of control of the operation of an engine in accordance with claim 1, **characterised in that** the fuel with a high octane index and a low energy density is selected from natural gas, alcohols or ethers.

5. Method of control of the operation of an engine in accordance with claim 1, **characterised in that** the fuel with a low octane index and a high energy density is selected from the petrols.

6. Method of control of the operation of an engine in accordance with claim 1, **characterised in that** it consists in multi-fuel association of at least one petrol with natural gas, or at least one petrol with at least one alcohol, or a mixture of at least one petrol and at least one alcohol with natural gas.

7. Method of control of the operation of an engine in accordance with claim 1, **characterised in that** the setpoint values are mapped as a function of the operating parameters of the engine.

8. Method of control of the operation of an engine in accordance with claim 1, **characterised in that** it consists in associating the two types of fuel so as to achieve two carburated mixtures introduced into the combustion chamber so as to obtain a stratification between the two mixtures.

9. Method of control of the operation of an engine in accordance with claim 1, **characterised in that** it consists in effecting an indirect injection of two types of fuel to achieve two carburated mixtures.

## Patentansprüche

1. Verfahren zur Steuerung des Betriebs einer Brennkraftmaschine mit Fremdzündung, die mindestens einen Brennraum aufweist und einen Verbrennungsmodus im Einstoffbetrieb oder im Mehrstoffbetrieb mit mindestens einem Kraftstofftyp, der eine hohe Oktanzahl und eine geringe Energiedichte aufweist, und mindestens einem anderen Kraftstofftyp, der eine niedrige Oktanzahl und eine hohe Energiedichte aufweist, verwenden kann, wobei in diesem Verfahren die Energie, die im Einstoffbetrieb der Maschine benötigt wird, entweder vom einen oder vom anderen dieser Kraftstofftypen zugeführt wird, und wobei die Energie, die im Mehrstoffbetrieb der Maschine benötigt wird, durch eine Verbindung der zwei Kraftstofftypen bereitgestellt wird, **dadurch gekennzeichnet, dass** das Verfahren beim Mehrstoffbetrieb der Maschine darin besteht:
- die Sollwerte der Gesamtenergiedichte und der Gesamtoktanzahl zu bestimmen, aus der Verbindung der Kraftstoffe resultieren,
- diese Kraftstoffe in einem Mengenverhältnis in den Brennraum einzuleiten, das darauf abzielt, die Sollwerte zu erreichen,
- die Istwerte der Gesamtenergiedichte und/oder der Gesamtoktanzahl dieser eingeleiteten Kraftstoffe zu bewerten,
- im Falle einer Abweichung zwischen den Sollwerten und den Istwerten, diese Abweichung auszugleichen, indem das Mengenverhältnis mindestens eines der Kraftstoffe verändert wird, um die Sollenergiedichte und/oder die Solloktanzahl zu erhalten.

2. Verfahren zur Steuerung des Betriebs einer Brennkraftmaschine nach Anspruch 1, **dadurch gekennzeichnet, dass** es darin besteht, die Istgesamtoktanzahl anhand eines Signals eines auf der Maschine angeordneten Vibrationssensors zu bewerten.

3. Verfahren zur Steuerung des Betriebs einer Brennkraftmaschine nach Anspruch 1, **dadurch gekennzeichnet, dass** es darin besteht, die Istgesamtenergiedichte anhand eines Signals eines Drucksensors des Brennraums zu bewerten.

4. Verfahren zur Steuerung des Betriebs einer Brennkraftmaschine nach Anspruch 1, **dadurch gekennzeichnet, dass** der Kraftstoff mit hoher Oktanzahl und geringer Energiedichte aus Erdgas, Alkoholen und Ethern gewählt wird.

5. Verfahren zur Steuerung des Betriebs einer Brennkraftmaschine nach Anspruch 1, **dadurch gekennzeichnet, dass** der Kraftstoff mit niedriger Oktanzahl und hoher Energiedichte aus den Benzinen gewählt wird.

6. Verfahren zur Steuerung des Betriebs einer Brennkraftmaschine nach Anspruch 1, **dadurch gekennzeichnet, dass** es darin besteht, im Mehrstoffbetrieb mindestens ein Benzin mit Erdgas oder mindestens ein Benzin mit mindestens einem Alkohol oder ein Gemisch aus mindestens einem Benzin und mindestens einem Alkohol mit Erdgas zu verbinden.

7. Verfahren zur Steuerung des Betriebs einer Brennkraftmaschine nach Anspruch 1, **dadurch gekennzeichnet, dass** die Sollwerte in Abhängigkeit von den Betriebsparametern der Brennkraftmaschine abgebildet sind.

8. Verfahren zur Steuerung des Betriebs einer Brennkraftmaschine nach Anspruch 1, **dadurch gekennzeichnet, dass** es darin besteht, die zwei Kraftstofftypen so zu verbinden, dass zwei Kraftstoff-Luft-Gemische hergestellt werden, die derart in den Brennraum eingeleitet werden, dass eine Schichtbildung zwischen den zwei Gemischen erhalten wird.

9. Verfahren zur Steuerung des Betriebs einer Brennkraftmaschine nach Anspruch 1, **dadurch gekennzeichnet, dass** es darin besteht, eine indirekte Einspritzung von zwei Kraftstofftypen durchzuführen, um zwei Kraflstoff-Lufl-Gemische herzustellen.
